# EUROPEAN PATENT APPLICATION

(11) **EP 2 060 462 A2**
(43) Date of publication of application: **20.05.2009**
(21) Application number: 08018218.1
(22) Date of filing: 17.10.2008
(51) Int. Cl.: B60W 20/00, B60K 6/48, B60W 10/02, B60W 10/08

(54) **Driving unit for vehicle**

(30) Priority: 18.10.2007 JP 2007271784
(71) Applicant: AISIN AI Co., Ltd., Nishio-shi, Aichi-ken (JP)
(72) Inventor: Tanba, Toshio, Nishio-shi Aichi-ken (JP)
(74) Representative: Serjeants

(57) **Abstract**

A driving unit for a vehicle includes a transmission (12), a motor generator (20) and a centrifugal release mechanism (25). The transmission (12) is employed for transmitting a driving torque outputted from an engine (10) to an output shaft (16) operatively connected to a plurality of driving wheels. The motor generator (20) is connected to the output shaft (16) via a force transmitting mechanism (17). The motor generator (20) functions as a motor for driving the output shaft (16) in cooperation with the engine (10) when supplied with electric current and functions as a generator when driven by the output shaft (16). The centrifugal release mechanism (25) is provided at the force transmitting mechanism (17). The centrifugal release mechanism (25) interrupts a force transmission between the output shaft (16) and the motor generator (20) in a predetermined driving state of the vehicle in which a running resistance applied to the driving wheels exceeds a driving force of the motor generator (20) applied to the driving wheels.

## Description

### FIELD OF THE INVENTION

This invention generally relates to a driving unit for a vehicle.

### BACKGROUND

As an example of a driving unit employed for a vehicle such as a hybrid-type vehicle, JP2006-166491A (hereinafter, referred to as reference 1) discloses a driving unit in which a rotational electric apparatus is directly connected to driving wheels at a further backward side than a transmission connected to an engine (directions herein correspond to an orientation of the vehicle). According to such driving unit for a vehicle, when supplied with the electric current, the rotational electric apparatus is actuated as a motor for driving the driving wheels without use of the transmission. Further, when the rotational electric apparatus is driven via an output shaft of the transmission, the rotational electric apparatus functions as a generator for generating electricity.

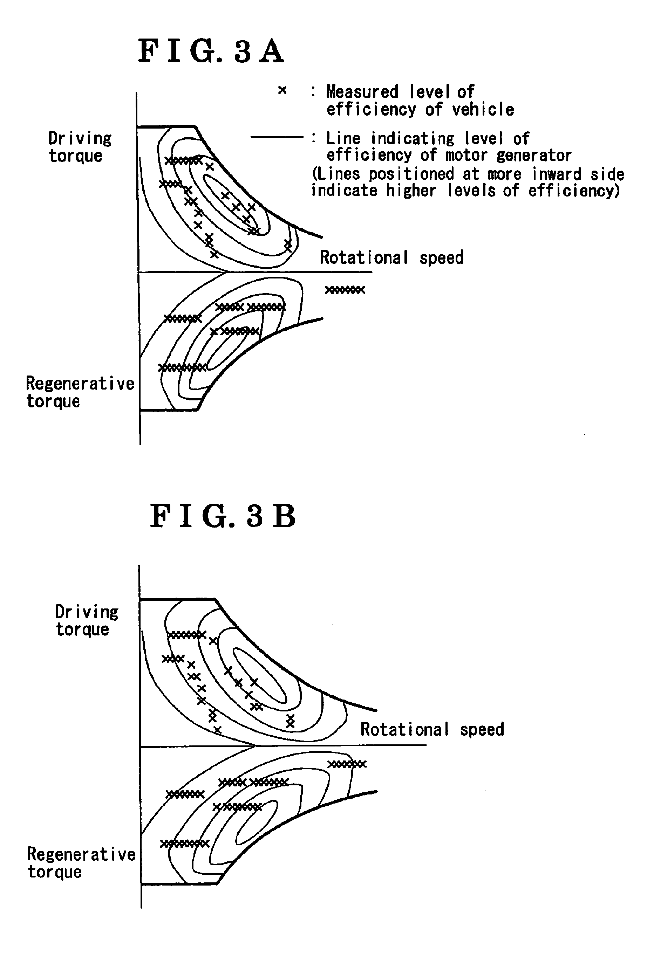

Fig. 3A schematically illustrates torque characteristics, relative to a rotational speed, of a motor generator designed for low-speed rotation. Fig. 3B schematically illustrates the torque characteristics, relative to the rotational speed, of the motor generator designed for high-speed rotation. Herein, the motor generator functions as an electric motor when supplied with the electric current from a battery. On the other hand, the motor generator functions as a generator when rotatably driven by an external force (for example, driven by driving wheels of the vehicle). An upper-half portion of the diagram illustrates a characteristic of the motor generator functioning as the motor, and a lower-half portion of the diagram illustrates a characteristic of the motor generator functioning as the generator. In Figs. 3A and 3B, plural approximately elliptic contour lines (thinner curve lines) indicate levels of efficiency of the motor generator. The contour lines positioned at more inward side indicate the higher level of efficiency of the motor generator. Plural X marks therein schematically indicate measured levels of efficiency of the vehicle. The X marks are obtained by driving the vehicle by cooperatively using the motor generator and measuring fuel efficiency by the 10-mode cycle test for rating the fuel efficiency in the 10-mode cycle of driving patterns (the 10-mode cycle test is used in Japan to measure the fuel efficiency). When comparing Figs. 3A and 3B, more number of X marks is positioned at an inner range of the contour lines in Fig. 3A than in Fig. 3B. This indicates that the fuel efficiency of the vehicle is improved by applying the motor generator for the low-speed rotation because the motor generator for the low-speed rotation is employed within a higher efficiency range more frequently in comparison with a condition where the motor generator for the high-speed rotation is applied. However, the efficiency of the motor generator for the low-speed rotation becomes lower than that of the motor generator for the high-speed rotation at a range where the rotational speed is higher. Therefore, when the vehicle is driven at high speeds with the motor generator for the low-speed rotation, heat is generated at the motor generator and the temperature of the motor generator becomes high, so that the motor generator requires to be cooled down. Further, in such a condition, fuel efficiency deteriorates.

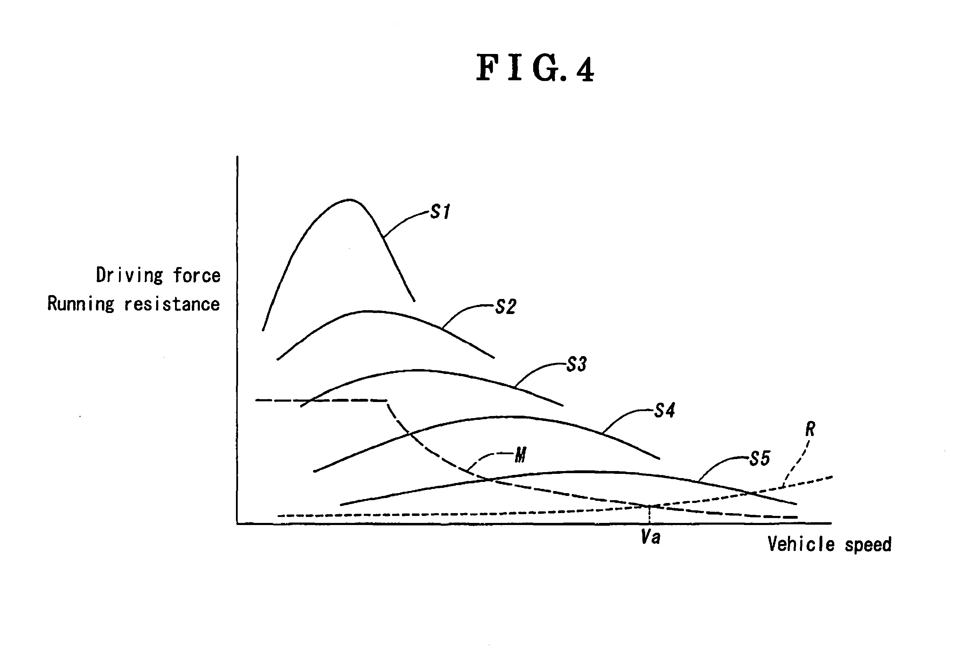

Fig. 4 illustrates characteristics of driving force and running resistance, relative to the vehicle speed, applied to the driving wheels of a vehicle including a transmission with five shift stages and the motor generator which is connected to an output shaft directly connected to the driving wheels at a backward side further than the transmission. Characteristic curves S1, S2, S3, S4 and S5 indicate the characteristics of the driving force generated by an internal inner combustion engine relative to the vehicle speed at first to fifth shift stages, respectively. The characteristic of the driving force generated by the motor generator relative to the vehicle speed is indicated with a driving force characteristic curve M. Because a variable range of the vehicle speed covers a wide range including low speeds and high speeds, the motor generator employed for the vehicle is required to be designed to cover the wide variable range of the vehicle speed (i.e., the rotational speed), which is however practically difficult to achieve. On the other hand, although the running resistance of the vehicle relative to the vehicle speed varies in response to driving conditions of the vehicle such as a condition of a road surface on which the vehicle is driven, the running resistance is indicated with a running resistance characteristic curve R in a normal driving state where the vehicle is running on road surface such as a plain paved road. In a high-speed range where the vehicle speed becomes equal to or higher than a predetermined value Va, i.e., in a range where the drive resistance characteristic curve R indicates higher level than the level indicated by the driving force characteristic curve M, the driving force for the driving wheels may hardly increase by the motor generator. Further, in such a high-speed range, an electrical efficiency of the motor generator is reduced, so that an electric power output is also reduced.

A need thus exists for a driving unit for a vehicle including a motor generator, which improves fuel efficiency, prevents heat generation and reduces deterioration of the fuel efficiency when the vehicle is driven at high speeds.

### SUMMARY OF THE INVENTION

According to an aspect of the present invention, a driving unit for a vehicle includes a transmission, a motor generator, and a centrifugal release mechanism. The transmission is employed for transmitting a driving torque outputted from an engine to an output shaft operatively connected to a plurality of driving wheels. The motor generator is connected to the output shaft via a force transmitting mechanism. The motor generator functions as a motor for driving the output shaft in cooperation with the engine when supplied with electric current and functions as a generator when driven by the output shaft. The centrifugal release mechanism is provided at the force transmitting mechanism. The centrifugal release mechanism interrupts a force transmission between the output shaft and the motor generator in a predetermined driving state of the vehicle in which a running resistance applied to the driving wheels exceeds a driving force of the motor generator applied to the driving wheels.

Due to the above described structure, even when the driving unit employs such motor generator designed for low speed rotation, which is more frequently applied with a higher efficiency range, the motor generator is not required to be cooled down by an increase of a heat generation, and fuel efficiency of the vehicle does not deteriorate in the predetermined driving state of the vehicle where the vehicle reaches high speed(s). Further, in such predetermined driving state of the vehicle, because the driving force of the motor generator applied for the driving wheels is not increased and the electric power generation is reduced due to the reduction of efficiency for generating the electric power by the motor generator, a deterioration of the function of the motor generator substantially does not occur.

Further according to another aspect of the present invention, the centrifugal release mechanism includes a centrifugal actuator and a frictional clutch provided between the motor generator and a centrifugal actuator. The force transmitting mechanism includes a clutch shaft coaxially arranged in parallel with a rotor shaft of the motor generator and connected to the output shaft. The frictional clutch includes a clutch housing, a clutch disc and an elastic pressure mechanism. The clutch housing is connected at an end portion of the rotor shaft of the motor generator. The clutch disc is provided inside the clutch housing and connected at an end portion of the clutch shaft. The elastic pressure mechanism is provided inside the clutch housing and operated to elastically press an outer circumferential portion of the clutch disc for a frictional engagement between the outer circumferential portion of the clutch disc and a clutch plate of the clutch housing in a non-loaded state and to release the frictional engagement between the outer circumferential portion of the clutch disc and the clutch plate when the elastic pressure mechanism is pressed in an axial direction of the clutch shaft. The centrifugal actuator includes a push plate, a supporting member and a plurality of weight members. The push plate is coaxially connected at the clutch shaft to be slidable in an axial direction of the clutch shaft and includes a cam surface having a wall surface inclined radially outwardly relative to the clutch shaft. The supporting member is coaxially secured at the clutch shaft at an opposite side of the frictional clutch relative to the push plate. The plurality of weight members is radially movably supported by the supporting member to move the push plate in the axial direction by contacting the cam surface when radially outwardly moved by a centrifugal force. The push plate presses the elastic pressure member via the cam surface to move the elastic pressure member in the axial direction to release the frictional engagement between the outer circumferential portion of the clutch disc and the clutch plate in a state in which a rotational speed of the clutch shaft increases to exceed a predetermined rotational speed.

Still further, the predetermined driving state includes the state in which the rotational speed of the clutch shaft increases to exceed the predetermined rotational speed.

Due to the above described structure, when the vehicle reaches the predetermined driving state by an increase of the vehicle speed and accordingly the rotational speed of the clutch shaft becomes high, the push plate is moved in the axial direction to push the elastic pressing mechanism. Therefore, the force transmission established by the frictional clutch is interrupted, so that the motor generator 20 is not operated. Thus, even when the driving unit employs such motor generator designed for low speed rotation, which is more frequently applied with a higher efficiency range, the motor generator is not required to be cooled down by an increase of a heat generation, and fuel efficiency of the vehicle does not deteriorate in the predetermined driving state of the vehicle where the vehicle reaches high speed(s).

Still further according to another aspect of the present invention, the elastic pressure mechanism includes a diaphragm spring formed of an annular plate member and locked inside the clutch housing at a radially intermediate portion thereof. Further, the diaphragm spring elastically presses the outer circumferential portion of the clutch disc via a pressure plate to frictionally engage the clutch disc with the clutch plate at the non-loaded state and releases the frictional engagement between the clutch disc and the clutch plate when an inner circumferential portion of the diaphragm spring is axially pressed.

Due to the above described structure, the fluctuation of the rotation of the output shaft generated by the connection of the motor generator is reduced. Therefore, shock generated when the vehicle starts to be driven by the motor generator is reduced.

Still further according to another aspect of the present invention, the driving unit for the vehicle further includes a stroke sensor detecting an axial position of the push plate. The motor generator is supplied with electric current to rotate the rotor shaft before the frictional clutch starts to be frictionally engaged so that a difference between a rotational speed of the rotor shaft and the rotational speed of the clutch shaft becomes equal to or lower than a predetermined value, on the basis of a signal outputted from the stroke sensor when the rotational speed of the clutch shaft is reduced from the predetermined rotational speed.

Due to the above described structure, a structure of the elastic pressure mechanism is simplified. Accordingly, a manufacturing cost for the driving unit for the vehicle can be reduced.

Still further according to another aspect of the present invention, the supporting member includes a boss portion coaxially supported by the clutch shaft and a plurality of guide pins extending radially outwardly from the boss portion. Further, a damper spring is provided between the boss portion of the supporting member and the plurality of weight members so that the weight members gradually contact the cam surface of the push plate with a predetermined time.

Due to the above described structure, because the damper spring is provided between the boss portion and the weight members, the frictional clutch is gradually engaged/disengaged (released) with a predetermined time when the vehicle speed increases/decreases by changing a spring constant. Accordingly, the shock generated when the frictional clutch is engaged/disengaged is reduced from being generated.

### BRIEF DESCRIPTION OF THE DRAWINGS

The foregoing and additional features and characteristics of the present invention will become more apparent from the following detailed description considered with reference to the accompanying drawings, wherein:

Fig. 1 is a schematic view illustrating an entire structure of a driving unit for a vehicle, according to an embodiment of the present invention;

Fig. 2 is a cross sectional view of a mechanism including a motor generator and a centrifugal release mechanism of the driving unit for the vehicle, according to the embodiment of the present invention;

Fig. 3A is a diagram illustrating torque characteristics relative to a rotational speed of the motor generator for low speed rotation according to a known driving unit;

Fig. 3B is a diagram illustrating torque characteristics relative to a rotational speed of the motor generator for high speed rotation according to the known driving unit; and

Fig. 4 is a diagram illustrating characteristics of driving force and driving resistance for the driving wheels relative to a vehicle speed, according to the known driving unit.

### DETAILED DESCRIPTION

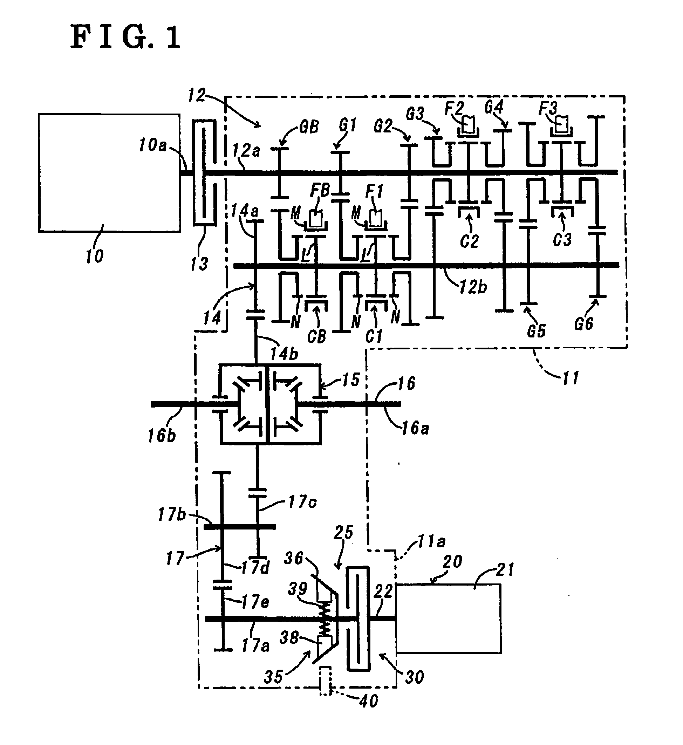

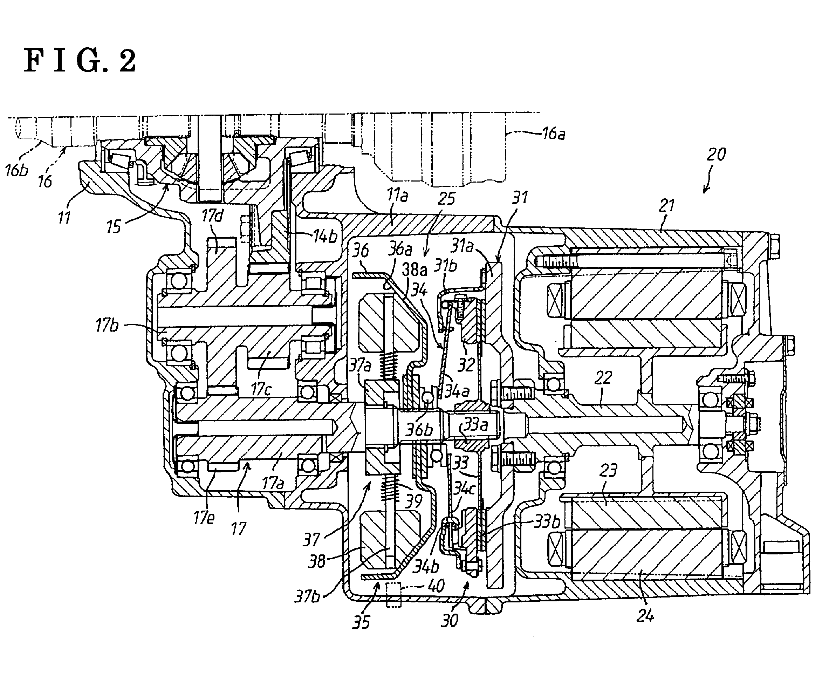

An embodiment of the present invention will be described hereinafter with reference to Figs. 1 and 2. According to the embodiment, a driving unit for a vehicle is adapted to a front-engine front-drive type vehicle, in which an input shaft and an output shaft of a transmission are arranged in parallel to each other, as a non-limiting example. The driving unit is mainly configured with an engine 10, a transmission 12, an output shaft 16 and a motor generator 20. The output shaft 16 transmits force outputted from the transmission 12 to driving wheels. The motor generator 20 is connected to the output shaft 16 via a force transmitting mechanism 17 and a centrifugal release mechanism 25.

An entire configuration of the driving unit will be described hereinafter with reference to Fig. 1. In a transmission case 11, an input shaft 12a and an intermediate shaft 12b are arranged in parallel with each other and rotatably supported by the transmission case 11. A first gear set G1, a second gear set G2, a third gear set G3, a fourth gear set G4, a fifth gear set G5, a sixth gear set G6 and a reverse gear set GB are arranged in parallel with one another between the input shaft 12a and the intermediate shaft 12b. Driving gears of the first and second gear sets G1, G2 are securely provided at the input shaft 12a, and driven gears of the first and second gear sets G1, G2 are rotatably supported by the intermediate shaft 12b. Further, a first switching clutch C1 is provided between the driven gears of the first and second gear sets G1, G2. Driving gears of the third to sixth gear sets G3-G6 are rotatably supported by the input shaft 12a. A second switching clutch C2 is provided between the driving gears of the third and fourth gear sets G3, G4. A third switching clutch C3 is provided between the driving gears of the fifth and sixth gear sets G5, G6. Driven gears of the third to sixth gear sets, G3-G6 respectively, are securely provided at the intermediate shaft 12b. A driving gear of the reverse gear set GB is securely provided at the input shaft 12a, and a driven gear of the reverse gear set GB is rotatably supported by the intermediate shaft 12b. Further, a reverse switching clutch CB is provided between the input shaft 12a and the main shaft 12b. More specifically, the reverse switching clutch CB is provided in the vicinity of the driven gear of the reverse gear set GB. The driving gear and the driven gear of the reverse gear set GB are engaged with each other via an idling gear (not illustrated).

Each of the first to third switching clutches C1-C3 are structured by a known synchromesh mechanism, in which a sleeve M is spline-engaged with an outer circumference of a clutch hub L secured at one of the input shaft 12a and the intermediate shaft 12b and is reciprocated in an axial direction to be engaged with engagement members N respectively secured at the corresponding adjacent gears arranged at axial sides thereof (hereinafter, referred to as axial side gear) for selectively connecting such gears to the clutch hub L. Only one axial side gear is provided at the axial side of the clutch hub L of the reverse switching clutch CB, however the reverse switching clutch includes substantially the same structure as the first to third switching clutches C1-C3. Thus, the transmission 12 is structured with such components. The input shaft 12a of the transmission 12 is rotatably driven by a crankshaft 10a of the engine 10 via a clutch 13.

The output shaft 16 is arranged in parallel with the intermediate shaft 12b. The output shaft 16 is structured with a first portion 16a and a second portion 16b, which are coaxially connected at an intermediate portion of the output shaft 16 via a differential mechanism 15. The first and second portions 16a, 16b are rotatably supported by the driving unit case 11. Further, outer end portions of the first and second portions 16a, 16b are connected to right and left driving wheels (not illustrated), respectively, via joints and drive shafts. The intermediate shaft 12b and the output shaft 16 are connected to each other via an output gear set 14, which is structured with an output driving gear 14a secured at one end of the intermediate shaft 12b and an output driven gear 14b secured at a case of the differential mechanism 15 and engaged with the output driving gear 14a.

The motor generator 20 is assembled at a part of the driving unit case 11. More specifically, the motor generator 20 is provided at an opposite position of the transmission 12 relative to the output shaft 16. The motor generator 20 is structured with a cylindrical casing 21, a rotor shaft 22, a rotor 23 and a stator 24. The rotor shaft 22 is coaxially rotatably supported by the casing 21. The rotor 23 is configured with plural external magnets circumferentially arranged along an outer circumference of the rotor shaft 22. The stator 24 includes plural iron cores including windings and is secured at an inner surface of the casing 21 so as to surround the rotor 23. The casing 21 of the motor generator 20 is secured at the driving unit case 11 via a bracket 11 a so that the rotor shaft 22 and the output shaft 16 are arranged to be in parallel with each other.

The motor generator 20 is employed for low-speed rotation. In a condition where a required driving force is not outputted only by the engine 10, the electric current is supplied to the motor generator 20 from a battery, so that the motor generator 20 is controlled to function as a motor for driving the output shaft 16 in cooperation with the engine 10. On the other hand, in a condition where the engine 10 is driven by the driving wheels or in a condition where the output of the engine 10 is greater than the required driving force, the motor generator 20 is controlled to function as a generator which generates electricity by being driven by the output shaft 16 and charges the battery with the generated electricity. Herein, a motor generator which is suitable for a vehicle driving from low to medium speeds corresponds to the motor generator for the low-speed rotation. A motor generator which is suitable for a vehicle driving from medium to high speeds corresponds to a motor generator for a high-speed rotation.

As is illustrated in Figs. 1 and 2, the force transmitting mechanism 17 is structured with a clutch shaft 17a, a transmitting shaft 17b, a first gear 17c, a second gear 17d and a third gear 17e. The clutch shaft 17a is supported by the driving unit case 11 so as to be coaxial with the motor generator 20. The transmitting shaft 17b is supported by the driving unit case 11 between the output shaft 16 and the clutch shaft 17a so as to be in parallel therewith. The first gear 17c is secured at one end portion of the transmitting shaft 17b and engaged with the output driven gear 14b of the output gear set 14, thus connecting the output shaft 16 and the transmitting shaft 17b. The second gear 17d is secured at another end portion of the transmitting shaft 17b. The third gear 17e is secured at one end portion of the clutch shaft 17a. The second and third gears 17d, 17e are engaged with one another, thus connecting the clutch shaft 17a and the transmitting shaft 17b. The motor generator 20 is connected at another end portion of the clutch shaft 17a. Three spline shaft portions, for example, are coaxially formed at the end portion (another end portion in the description above) of the clutch shaft 17a, at which the motor generator 20 is provided. Diameters of the spline shaft portions are arranged to be stepwisely smaller from the spline shaft portion located at the furthest side of the motor generator 20 to the spline shaft portion located at the closest side of the motor generator 20.

As illustrated in Figs. 1 and 2, the centrifugal release mechanism 25 is located inside the bracket 11a. The centrifugal release mechanism 25 is structured with a frictional clutch 30 and a centrifugal actuator 35. As best shown in Fig. 2, the frictional clutch 30 includes a clutch housing 31, a pressure plate 32, a clutch disc 33 and an elastic pressure mechanism 34. The clutch housing 31 includes a disc-shaped clutch plate 31a, which is connected at an end of the rotor shaft 22 so as to be coaxial therewith by means of bolts, and a cover portion 31 b, which coaxially covers the clutch plate 31a and of which a central portion is largely opened. More specifically, a surface of the clutch plate 31a, which is closer to the centrifugal actuator 35, is covered with the cover portion 31 b while including a space between the surface of the clutch plate 31a and the cover portion 31b. A diameter of the clutch disc 33 is larger than a diameter of the opening of the cover portion 31b. A frictional plate of an outer circumferential portion 33b of the clutch disc 33 is located inside the cover portion 31b. A boss portion 33a of the clutch disc 33 is spline-engaged with an end portion of the clutch shaft 17a so as to be rotatable with the clutch shaft 17a.

The elastic pressure mechanism 34 is structured with a diaphragm spring 34a and a pair of pivot rings 34b. The diaphragm spring 34a is an annular member, and plural slits 34c are formed at the diaphragm spring 34a. More specifically, the slits 34c extend radially outwardly from a substantially radially intermediate portion of the diaphragm spring 34a. The pivot rings 34b are assembled at the opening of the cover portion 31b of the clutch housing 31 and pivotably support (interpose) the radially intermediate portion of the diaphragm spring 34a. As illustrated in Fig. 2 (specifically in the upper half portion of Fig. 2), the diaphragm spring 34a is a plate member formed in a shallow cone shape. The diaphragm spring 34a is elastically pressed in a vertical direction in Fig. 2, so that the outer circumferential portion 33b of the clutch disc 33 is elastically pressed towards the clutch plate 31a of the clutch housing 31 and is frictionally engaged therewith by the diaphragm spring 34a via the annular pressure plate 32, which is locked at an outer circumferential rim portion of the diaphragm spring 34a. When an inner circumferential portion of the annular diaphragm spring 34a is pressed towards the clutch plate 31a, the inner circumferential portion of the diaphragm spring 34a pivotally moves (oscillates) about a portion around the pivot rings 34b and is elastically deformed so that an apex angle of the shallow cone shape becomes larger, as illustrated in Fig. 2 (specifically in the lower half portion of Fig. 2). Further, the pressure plate 32 locked at the outer circumferential rim portion of the diaphragm spring 34a is separated from the outer circumferential portion 33b of the clutch disc 33. Thus, a frictional engagement between the outer circumferential portion 33b of the clutch disc 33 and the clutch plate 31a of the clutch housing 31 is released.

The centrifugal actuator 35 mainly includes a push plate 36, a supporting member 37 and plural weight members 38. The push plate 36 is made of sheet metal formed by press molding. A central portion of the push plate 36 is reinforced, and the reinforced central portion of the push plate 36 is coaxially assembled on an intermediate portion of the clutch shaft 17a so as to be slidable only in the axial directions of the clutch shaft 17a. Further, an inclined cam surface 36a (serving as a cam surface) is formed at an inner surface of the push plate 36, which is located at an opposite side to the frictional clutch 30. The inclined cam surface 36a has a wall surface inclined radially outwardly relative to the clutch shaft 17. More specifically, the inclined cam surface 36a is formed in a circular conical shape surface or a pyramid shape surface (for example, a quadrangular pyramid shape surface). Still further, a thrust ball bearing 36b intervenes between an end surface of the central portion of the push plate 36, which is located at a side where the frictional clutch 30 is provided, and a vicinity of an inner circumferential portion of the diaphragm spring 34a. A stroke sensor 40 is provided at the bracket 11 a by which the motor generator 20 is supported and in which the centrifugal release mechanism 25 is accommodated. The stroke sensor 40 detects an axial position of the push plate 36 so as to rotate the rotor 23 of the motor generator 20 in advance before the frictional engagement of the frictional clutch 30 starts (as described in detail below).

The supporting member 37 of the centrifugal actuator 35 is structured with a boss portion 37a and plural guide pins 37b (for example, four guide pins). The boss portion 37a is coaxially engaged with the largest spline shaft portion (i.e., the spline portion furthest to the motor generator 20) of the clutch shaft 17a and is securely connected at the clutch shaft 17a by means of a stepped portion and a retaining ring in a manner where an axial movement of the boss portion 37a is restrained. The guide pins 37b are secured at an outer circumferential portion of the boss portion 37a. More specifically, bottom portions (inner circumferential portions) of the guide pins 37b are secured circumferentially equidistantly, and the guide pins 37b extend radially outwardly. The weight portions 38 are radially movably supported by the guide pins 37b, respectively. An inclined surface 38a is formed at a part of each weight portion 38a. The inclined surface 38a of each weight portion 38 is slidably engaged with the inclined cam surface 36a of the push plate 36. Further, damper springs 39 are loosely wound around the guide pins 37b, respectively, at positions between the corresponding weight members 38 and the boss portion 37a so that the weight members 38 gradually make contact with the inclined cam surface 36a of the push plate 36 (as described in detail below).

Next, an operation of the driving unit for the vehicle according to the embodiment will be described hereinafter. In a non-operational state of the vehicle where the vehicle is stopped and the clutch shaft 17a does not rotate, the centrifugal force does not act on the weight members 38. Therefore, as illustrated in Fig. 2 (specifically in the upper portion of Fig. 2), the push plate 36 is slightly elastically pressed by the diaphragm spring 34a towards the supporting member 37 via the thrust ball bearing 36b. Further, the weight members 38, which contact the inclined cam surface 36a of the push plate 36, are pressed radially to the most inward position and brought into contact with the boss portion 37a of the supporting member 37 via the damper springs 39. In such a state, a pressing force acting between the push plate 36 and the diaphragm spring 34a is so small that an elastic pressing force of the diaphragm spring 34a for elastically pressing the outer circumferential portion 33b of the clutch disc 33 towards the clutch plate 31a of the clutch housing 31 is not substantially affected. Therefore, the outer circumferential portion 33b of the clutch disc 33 is completely frictionally engaged with the clutch plate 31a of the clutch housing 31.

On the other hand, in an operational state of the vehicle, an appropriate speed shift stage is selected in the transmission 12 by a manual operation or an automatic operation, and the engine 10 drives the driving wheels via the clutch 13, the transmission 12 and the output shaft 16, thereby enabling the vehicle to be driven. When the vehicle is running, the rotational speed of the clutch shaft 17a is increased in proportion to an increase of the vehicle speed. Accordingly, the push plate 36 is pressed towards the frictional clutch 30 via the inclined cam surface 36a by the centrifugal force applied to the weight members 38, and a force for pressing the inner circumferential portion of the diaphragm spring 34a via the thrust ball bearing 36b is increased. However, until the vehicle speed is increased to reach the vehicle speed Va at which the running resistance of the driving wheels indicated with the characteristic curve line R exceeds the driving force of the motor generator 20 indicated with the characteristic curve line M as illustrated in Fig. 4, the frictional engagement between the outer circumferential portion 33b of the clutch disc 33 and the clutch plate 31a of the clutch housing 31 is not released by the force for pressing the inner circumferential portion of the diaphragm spring 34a via the thrust ball bearing 36b. Accordingly, the rotor shaft 22 of the motor generator 20 is connected to the output shaft 16. In such condition, when the required driving force is not outputted only by the engine 10, electric current is supplied to the motor generator 20 from the battery and the motor generator 20 functions as a motor for driving the output shaft 16 in cooperation with the engine 10. On the other hand, when the engine 10 is driven by the driving wheels of the vehicle or when the output of the engine 10 is greater than the required driving force, the motor generator 20 functions as a generator to generate electricity by being driven by the output shaft 16 and charge the battery with the generated electricity.

When the vehicle reaches a predetermined high speed driving state (serving as a predetermined driving state) where the vehicle speed is increased to be equal to or greater than the vehicle speed Va at which the running resistance applied to the driving wheels exceeds the driving force of the motor generator 20 (i.e., in a range where the drive resistance characteristic curve R indicates higher level than the level indicated by the driving force characteristic curve M) as illustrated in Fig. 4, a rotational speed of the clutch shaft 17 increases to exceed a predetermined rotational speed. Further in such a state, the force of the push plate 36 for pressing the inner circumferential portion of the diaphragm spring 34a is increased. As is described above, the diaphragm spring 34a pivotally moves about the vicinity of the pivot ring 34b due to the increase of the force for pressing the inner circumferential portion of the diaphragm spring 34a, and the pressure plate 32 is separated from the outer circumferential portion 33b of the clutch disc 33. Thus, the frictional engagement between the outer circumferential portion 33b of the clutch disc 33 and the clutch plate 31b of the clutch housing 31 is released. Accordingly, a force transmission between the output shaft 16 and the motor generator 20 is interrupted, so that the motor generator 20 is not operated. The efficiency of the motor generator 20 designed for the low speed rotation, which is more frequently applied with a higher efficiency range, may be deteriorated at a range where the rotational speed is higher. Further, heat may be generated at the motor generator 20 when the vehicle is driven at high speeds. However, according to the embodiment, even when the driving unit employs such motor generator 20 designed for the low speed rotation, the motor generator 20 is not required to be cooled down by an increase of the heat generation, and the fuel efficiency of the vehicle does not deteriorate in the predetermined high speed driving state of the vehicle where the vehicle reaches high speeds. Further, in such predetermined high speed driving state of the vehicle, because the driving force of the motor generator 20 applied for the driving wheels is not increased and the electric power generation is reduced due to the reduction of efficiency for generating the electric power by the motor generator 20, a deterioration of the function of the motor generator 20 substantially does not occur.

When the vehicle speed is reduced from the above described predetermined high speed driving state, the centrifugal force acting on the weight members 38 is reduced. Therefore, the push plate 36 is pressed to move by the diaphragm spring 34a in a direction to be away from the frictional clutch 30. In accordance with the movement of the push plate 36, the diaphragm spring 34a moves towards the centrifugal actuator 35. Further, when the vehicle speed becomes equal to or lower than the vehicle speed Va, the frictional clutch 30 is frictionally engaged. Accordingly, rotation of the rotor 23 of the motor generator 20, which has stopped to rotate until the frictional clutch 30 is engaged, is rapidly increased, so that a load applied to the clutch shaft 17a and output shaft 16 connected thereto is also rapidly increased. Therefore, the vehicle speed may be temporally rapidly reduced and a shock may be generated. In order to restrain such shock from being generated, the stroke sensor 40 for detecting the axial position of the push plate 36 is provided at the bracket 11a supporting the motor generator 20. The stroke sensor 40 detects the axial position of the push plate 36 before the vehicle speed is reduced from the predetermined high speed state and the rotational speed of the clutch shaft 17 is reduced from the predetermined rotational speed for establishing the frictional engagement of the fictional clutch 30. Then, the motor generator 20 is supplied with electric current to rotate the rotor shaft 22 so that the rotor shaft 22 rotates at a rotational speed similar to that of the clutch shaft 17a (so that a difference between a rotational speed of the rotor shaft 22 and that of the clutch shaft 17 becomes equal to or lower than a predetermined value) on the basis of a detection signal outputted by the stroke sensor 40. Thus, the fluctuation of the rotation of the output shaft 16 generated by the connection of the motor generator 20 is reduced. Therefore, shock generated when the vehicle starts to be driven by the motor generator 20 is reduced.

Further, when the vehicle speed is increased, the force of the push plate 36 for pressing the diaphragm spring 34a by the centrifugal force of the weight members 38 exceeds a certain value and the diaphragm spring 34a is elastically deformed to start the pivotal movement about the vicinity of the pivot ring 34b, the weight members 38 move radially outwardly, so that an increase of the centrifugal force applied to the weight members 38 is accelerated. Accordingly, the frictional engagement of the frictional clutch 30 is rapidly released. In the same manner, when the vehicle speed is decreased, the pressing force of the push plate 36 for pressing the diaphragm spring 34a by the centrifugal force of the weight members 38 becomes equal to or lower than the certain value and the weight members 38 moves radially inwardly, so that a reduction of the centrifugal force applied to the weight members 38 is accelerated. Therefore, the frictional clutch 30 is rapidly frictionally engaged. Accordingly, the load applied to the output shaft 16 rapidly fluctuates, and shock may be generated due to the rapid change of the vehicle speed. However, according to the embodiment described above, because the damper springs 39 are provided between the boss portion 37a and the weight members 38 supported at the corresponding guide pins 37b, the frictional clutch 30 is gradually engaged/disengaged (released) with a predetermined time when the vehicle speed increases/decreases by changing a spring constant. Accordingly, the shock described above is reduced from being generated.

Further according to the embodiment described above, the elastic pressure mechanism 34 is made of the annular plate member and the radially intermediate portion thereof is locked inside the clutch housing 31. When the elastic pressure mechanism 34 is in a non-loaded state where no load is applied at an inner circumferential portion of the elastic pressure mechanism 34, the outer circumferential portion 33b of the clutch disc 33 is elastically pressed and frictionally engaged with the clutch plate 31a of the clutch housing 31 via the pressure plate 32. Further, the inner circumferential portion of the elastic pressure mechanism 34 is structured with the diaphragm spring 34a, which releases the frictional engagement of the clutch disc 33 by being axially pressed. So configured, a structure of the elastic pressure mechanism 34 is simplified. Accordingly, a manufacturing cost for the driving unit for the vehicle can be reduced.

## Claims

1. A driving unit for a vehicle, comprising:
a transmission (12) for transmitting a driving torque outputted from an engine (10) to an output shaft (16) operatively connected to a plurality of driving wheels;
a motor generator (20) connected to the output shaft (16) via a force transmitting mechanism (17) and functioning as a motor for driving the output shaft (16) in cooperation with the engine (10) when supplied with electric current, the motor generator (20) functioning as a generator when driven by the output shaft (16); and
a centrifugal release mechanism (25) provided at the force transmitting mechanism (17), the centrifugal release mechanism (25) interrupting a force transmission between the output shaft (16) and the motor generator (20) in a predetermined driving state of the vehicle in which a running resistance applied to the driving wheels exceeds a driving force of the motor generator (20) applied to the driving wheels.

2. A driving unit for a vehicle, according to claim 1, wherein
the centrifugal release mechanism (25) includes a centrifugal actuator (35) and a frictional clutch (30) provided between the motor generator (20) and a centrifugal actuator (35),
the force transmitting mechanism (17) includes a clutch shaft (17a) coaxially arranged in parallel with a rotor shaft (22) of the motor generator (22) and connected to the output shaft (16),
the frictional clutch (30) comprises:
a clutch housing (31) connected at an end portion of the rotor shaft (22) of the motor generator (20);
a clutch disc (33) provided inside the clutch housing (31) and connected at an end portion of the clutch shaft (17); and
an elastic pressure mechanism (34) provided inside the clutch housing (31) and operated to elastically press an outer circumferential portion (33b) of the clutch disc (33) for a frictional engagement between the outer circumferential portion (33b) of the clutch disc (33) and a clutch plate (31b) of the clutch housing (31) in a non-loaded state and to release the frictional engagement between the outer circumferential portion (33b) of the clutch disc (33) and the clutch plate (31b) when the elastic pressure mechanism (34) is pressed in an axial direction of the clutch shaft (17),
the centrifugal actuator (35) comprises:
a push plate (36) coaxially connected at the clutch shaft (17) to be slidable in an axial direction of the clutch shaft (17) and including a cam surface (36a) having a wall surface inclined radially outwardly relative to the clutch shaft (17);
a supporting member (37) coaxially secured at the clutch shaft (17) at an opposite side of the frictional clutch (30) relative to the push plate (36); and
a plurality of weight members (38) radially movably supported by the supporting member (37) and moving the push plate (36) in the axial direction by contacting the cam surface (36a) when radially outwardly moved by a centrifugal force,
and wherein
the push plate (36) presses the elastic pressure member (34) via the cam surface (36a) to move the elastic pressure member (34) in the axial direction to release the frictional engagement between the outer circumferential portion (33b) of the clutch disc (33) and the clutch plate (31b) in a state in which a rotational speed of the clutch shaft (17) increases to exceed a predetermined rotational speed.

3. A driving unit for a vehicle, according to claim 2, wherein
the predetermined driving state includes the state in which the rotational speed of the clutch shaft (17) increases to exceed the predetermined rotational speed.

4. A driving unit for a vehicle, according to claim 2, further comprising:
a stroke sensor (40) detecting an axial position of the push plate (36),
wherein the motor generator (20) is supplied with electric current to rotate the rotor shaft (22) before the frictional clutch (30) starts to be frictionally engaged so that a difference between a rotational speed of the rotor shaft (22) and the rotational speed of the clutch shaft (17) becomes equal to or lower than a predetermined value, on the basis of a signal outputted from the stroke sensor (40) when the rotational speed of the clutch shaft (17) is reduced from the predetermined rotational speed.

5. A driving unit for a vehicle, according to any of claims 2 and 4, wherein
the elastic pressure mechanism (34) includes a diaphragm spring (34a) formed of an annular plate member and locked inside the clutch housing (31) at a radially intermediate portion thereof, and wherein
the diaphragm spring (34a) elastically presses the outer circumferential portion (33b) of the clutch disc (33) via a pressure plate (32) to frictionally engage the clutch disc (33) and the clutch plate (36) at the non-loaded state and releases the frictional engagement between the clutch disc (33) with the clutch plate (36) when an inner circumferential portion of the diaphragm spring (34a) is axially pressed.

6. A driving unit for a vehicle, according to any of claims 2 to 5, wherein
the supporting member (37) comprises a boss portion (37a) coaxially supported by the clutch shaft (17) and a plurality of guide pins (3 7b) extending radially outwardly from the boss portion (37a), and
a damper spring (39) is provided between the boss portion of the supporting member (37) and the plurality of weight members (38) so that the weight members (38) gradually contact the cam surface (36a) of the push plate (36) with a predetermined time.
